**Europäisches Patentamt**

**European Patent Office**

**Office européen des brevets**

(19)

(11) Veröffentlichungsnummer: **0 025 956**
**B1**

(12) **EUROPÄISCHE PATENTSCHRIFT**

(45) Veröffentlichungstag der Patentschrift:
**01.08.84**

(51) Int. Cl.³: **H 04 N 1/036,** G 03 B 27/16,
G 03 G 15/32, G 06 K 15/12

(21) Anmeldenummer: **80105488.3**

(22) Anmeldetag: **12.09.80**

(54) **Optische Vorrichtung zum berührungslosen Schreiben.**

(30) Priorität: **21.09.79 DE 2938224**

(43) Veröffentlichungstag der Anmeldung:
**01.04.81 Patentblatt 81/13**

(45) Bekanntmachung des Hinweises auf die Patenterteilung:
**01.08.84 Patentblatt 84/31**

(84) Benannte Vertragsstaaten:
**AT BE CH FR GB IT LI LU NL SE**

(56) Entgegenhaltungen:
**CH - A - 526 174**
**DE - A - 1 901 310**
**DE - A - 2 065 120**
**DE - B - 1 946 288**
**FR - A - 2 390 866**
**GB - A - 1 355 066**
**US - A - 1 751 584**
**US - A - 3 141 105**
**US - A - 3 581 102**

**The Bell System Technical Journal, Vol. 57, Nr. 1, Jan.
1978, S. 91-97**

(73) Patentinhaber: **SIEMENS AKTIENGESELLSCHAFT,
Berlin und München Wittelsbacherplatz 2,
D-8000 München 2 (DE)**

(72) Erfinder: **Baues, Peter, Dr., Haydnstrasse 10,
D-8033 Krailling (DE)**

## Beschreibung

Die vorliegende Erfindung betrifft eine optische Vorrichtung zum berührungslosen Schreiben, bei der blattförmiges Aufzeichnungsmaterial auf eine Trommel gespannt ist, vor der in einem Mindestabstand ein mittels einer Führungsvorrichtung parallel zur Trommelachse bewegbarer Schreibkopf angeordnet ist, der Lichtwellenleiter in der Form von Glasfasern enthält, in dem die der Trommel zugewandten Lichtaustrittsenden der Lichtwellenleiter linear und dicht gepackt nebeneinander angeordnet sind und bei dem die Bildinformation, die jeweils durch die Lichtaustrittsenden der Lichtwellenleiter in der Form von Bildpunkten strukturiert wird, mittels entsprechend modulierten Lichtes den der Trommel abgewandten Lichteintrittsenden der Lichtwellenleiter zuführbar und durch die Lichtwellenleiter übertragbar ist, wobei die lineare Anordnung der Lichtaustrittsenden senkrecht zu der Achse der Trommel orientiert ist und wobei individuelle, entsprechend der jeweils eintreffenden Bildinformation erregbare Lichtquellen vorgesehen sind, die jeweils individuell einem Lichtwellenleiter zugeordnet und räumlich derart angeordnet sind, dass ihre jeweilige Lichtemission auf die Lichteintrittsenden der Lichtwellenleiter gerichtet ist.

Bekannte Vorrichtungen zum berührungslosen Schreiben benutzen als Schreibmittel einen Tinten- oder Lichtstrahl. Diese bekannten Vorrichtungen sind in der Regel aufwendig. Die mit Lichtstrahlen arbeitenden Vorrichtungen haben im allgemeinen einen hohen Platzbedarf.

Aus der US-A-1 751 584 ist bereits eine optische Vorrichtung zum berührungslosen Schreiben, bei der blattförmiges Aufzeichnungsmaterial auf eine Trommel gespannt ist, vor der in einem Mindestabstand ein mittels einer Führungsvorrichtung parallel zur Trommelachse bewegbarer Schreibkopf angeordnet ist, der Lichtwellenleiter in Form von Glasfasern enthält, in dem die der Trommel zugewandten Lichtaustrittsenden der Lichtwellenleiter linear und dicht gepackt nebeneinander angeordnet sind und bei dem die Bildinformation, die jeweils durch die Lichtaustrittsenden der Lichtwellenleiter in der Form von Bildpunkten strukturiert wird, mittels entsprechend modulierten Lichtes den der Trommel abgewandten Lichteintrittsenden der Lichtwellenleiter zuführbar und durch die Lichtwellenleiter übertragbar ist, bekannt. Diese bekannte Vorrichtung weist Merkmale dahingehend auf, dass die einzelnen Lichtwellenleiter in ihrer relativen Lage zueinander fixiert sind, dass weiterhin die lineare Anordnung der Lichtaustrittsenden senkrecht zu der Achse der Trommel orientiert ist und dass individuelle, entsprechend der jeweils eintreffenden Bildinformation erregbare Lichtquellen vorgesehen sind, welche jeweils individuell einem Lichtwellenleiter zugeordnet sind, sowie dass ihre jeweilige Lichtemission auf die Lichteintrittsenden der Lichtwellenleiter gerichtet ist.

Aus der Druckschrift «The Bell System Technical Journal», Vol. 57, No. 1, Jan. 78, S. 91–97 ist eine Anordnung bekannt, bei der einzelne Lichtwellenleiter in ihrer relativen Lage zueinander durch eine mit auf photolithographischem Wege eingeätzten Gräben versehene, vorzugsweise aus Halbleitermaterial bestehende Justierplatte fixiert sind.

Aus der FR-AI-2 390 866 ist bereits eine optische Vorrichtung zum berührungslosen Schreiben bekannt, bei der blattförmiges Aufzeichnungsmaterial auf eine ebene Fläche gespannt ist. In dieser bekannten Vorrichtung sind einzelne Lichtwellenleiter masshaltig in ihrer relativen Lage zueinander durch eine Justierplatte, z.B. aus Plastik, fixiert, wobei in dieses Material Vertiefungen geformt sind, welche den Platz für die einzelnen Lichtwellenleiter präzise festlegen.

Aus der DE-AI 1 901 310 ist ein optischer Paralleldrucker mit einer Typentrommel und Elektronenblitzröhren als Lichtquellen für die Beleuchtungseinrichtung bekannt, bei dem vorgesehen ist, dass die Elektronenblitzröhren ausserhalb der Typentrommel in optisch voneinander getrennten Kammern untergebracht und über jeweils ein Lichtleitkabel mit der Beleuchtungsstelle innerhalb der Typentrommel verbunden sind. Von diesem Paralleldrucker ist ausserdem eine Anpassung des vorgesehenen Schreibkopfes an den Radius der Typentrommel bekannt.

Aus der US-A-3 141 105 ist eine Anordnung für eine Katodenstrahlröhre mit Vielfachglasfaser-Anzeigefläche bekannt, bei welcher Anordnung Justierplatten mit Führungskanälen zur Aufnahme der Glasfasern vorgesehen sind, wobei die Führungskanäle oder -gräben auf der einen Seite der Justierplatten einen engen Abstand voneinander und auf der anderen Seite einen vergrösserten Abstand voneinander aufweisen.

Die zuvor genannten bekannten Vorrichtungen oder Anordnungen weisen mit Ausnahme der zuletzt genannten gemäss den ihnen zugrundeliegenden Aufgaben entweder keine Justierplatten oder nur solche ohne konvergierende Kanäle auf. Die zuletzt genannte Anordnung enthält zwar Justierplatten mit konvergierenden Kanälen, ist jedoch nicht für eine Schreibvorrichtung bestimmt.

Der vorliegenden Erfindung liegt die Aufgabe zugrunde, ein kostengünstiges Faksimilegerät mit geringem Platzbedarf, etwa dem Platzbedarf einer normalen Schreibmaschine, zu schaffen, bei dem die die optischen Schreibsignale führenden Glasfasern oder Lichtwellenleiter präzise aus einem relativ breiten Lichtquellenzeilenbereich in einen relativ engen Schreibkopfzeilenbereich zusammengeführt sind, um präzise Faksimileaufzeichnungen hoher Auflösung zu ermöglichen.

Die Aufgabe der Erfindung wird durch eine optische Vorrichtung der eingangs genannten Art gemäss dem Oberbegriff des Hauptanspruches gelöst, die dadurch gekennzeichnet ist, dass die einzelnen Lichtwellenleiter in an sich bekannter Weise masshaltig in ihrer relativen Lage zueinander durch zumindest eine an sich bekannte mit auf photolithographischem Wege eingeätzten Gräben versehene, vorzugsweise aus Halbleitermaterial bestehende Justierplatte fixiert sind, dass der Schreibkopf aus einer Anzahl von Lichtwellenleitern und zwei diese einschliessenden Einschichtjustierplatten besteht, dass die beiden Einschichtjustierplatten zusammen mit den von ihnen umschlossenen Lichtwellenleitern verklebt sind, dass die trommelseitige Schreibkopffläche, die die Lichtaustrittsenden der Lichtwellenleiter auf- weist, entsprechend dem gegebenen Trommel- radius so geformt und bearbeitet ist, dass sie eine konkave, reibungsarme Fläche als Nachbildung des Zylindermantels der Trommel mit um einen Mindestabstand beider Oberflächen voneinander vergrössertem Radius darstellt, dass die der Trommel abgewandte, die Lichteintrittsenden der Lichtwellenleiter aufweisende Seite des Schreibkopfes mit einer Lichtquellenzeile derart verbunden ist, dass jeweils die Lichtemission einer individuellen Lichtquelle auf das Lichteintrittsende des ihr zugeordneten Lichtwellenleiters gerichtet ist, dass die Lichtquellenzeile mit einer die notwendigen elektrischen Lichtquellenanschlüsse enthaltenden Verbindungseinrichtung, vorzugsweise einer Steckerplatte, verbunden ist, dass der Gesamtaufbau des Schreibkopfes zusammen mit einer Befestigungsvorrichtung zu einer monolithi- schen Anordnung, die vorzugsweise kunstharz- vergossen ist, zusammengefasst ist und dass die Ansteuerung der Lichtquellen mit einer Mi- krocomputeranordnung oder einem Mikroprozes- sor durchgeführt wird.

Die erfindungsgemässe optische Vorrichtung bietet den Vorteil, dass ein Mittel zum berührungslosen Schreiben, mit der beliebige Faksimilewiedergaben ausgeführt werden können, geschaffen ist, das relativ platzsparend und relativ einfach und damit störungsarm und ausserdem vorteilhafterweise relativ kostengünstig realisierbar ist.

Weiterbildungen der Erfindung sind durch die in den Unteransprüchen angegebenen Merkmale gekennzeichnet.

Im folgenden wird die Erfindung an Hand mehrerer Figuren im einzelnen erläutert, die Ausführungsbeispiele der Erfindung betreffen.

Fig. 1 zeigt schematisch die Anordnung einer Trommel 1 mit einem davor stehenden Schreibkopf, der eine Anzahl Lichtwellenleiter 2 enthält.

Fig. 2 zeigt eine Anordnung von zwei Ein- schichtjustierplatten 3 mit auf photolithographi- schem Wege eingeätzten Gräben zur Aufnahme der Lichtwellenleiter 2.

Fig. 3 zeigt eine etwas mehr ins einzelne gehende schematische Darstellung eines Schreibkopfes 6 mit einer trommelseitigen Schreibkopffläche 5, die um einen Mindestabstand zu der gedachten Trommeloberfläche, die einen Trommelradius 4 hat, von dieser entfernt ist. Der Schreibkopf 6 enthält im übrigen eine Lichtquellenzeile 7, die an die Lichtwellenleiter 2 mit lichtemittierenden Dioden LED 9 angeschlossen ist. Die lichtemittierenden Dioden (LED) werden in einer Zeile mit Hilfe der Halbleitertechnologie integriert auf einem Chip aus geeignetem Halbleitermaterial aufgebaut.

Fig. 4 zeigt schematisch die Draufsicht einer Justierplatte mit verengender Führung 10, bei der Gräben 11 zur Aufnahme von Lichtwellenleitern trommelseitig nahe beieinander und lichtquellenseitig weit voneinander entfernt angeordnet sind.

Fig. 5 zeigt ausschnittsweise eine Anordnung von zwei Zweischichten-Justierplatten 12, die zwei Lagen von Lichtwellenleitern 2 in zueinander versetzter Anordnung umschliessen.

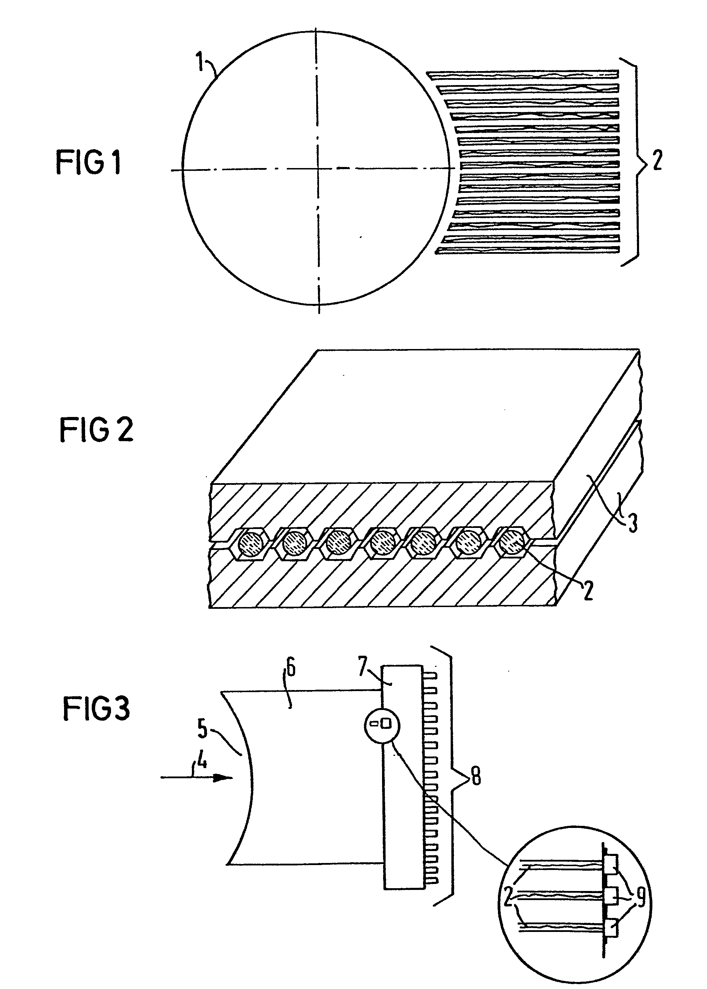

Wie bereits erläutert, zeigt Fig. 1 schematisch die Anordnung einer Trommel 1 mit einem davorstehenden Schreibkopf, der eine Anzahl von Lichtwellenleitern 2 enthält. Diese Lichtwellenleiter 2 liegen dicht übereinander, z.B. mit einer Pakkungsdichte von 8 Stück pro 1 mm, und füllen damit beispielsweise eine Höhe von 1 cm aus. Die Lichtwellenleiteranordnung ist auf einer Führungsvorrichtung montiert und wird dadurch vor der Trommel 1 in Achsenrichtung hin und her bewegt. Diese Technik wird auch bei vielen herkömmlichen Typendruckern angewendet.

Die genaue, masshaltige Anordnung der Lichtwellenleiter 2 wird mit Justierplatten, die vorzugsweise aus Halbleitermaterialien, wie Si, GaAs bzw. GaP bestehen, vorgenommen, in die durch eine photolithographische Technik Gräben zur Aufnahme der Lichtwellenleiter 2 eingeätzt sind. Herstellungsverfahren für derartige aus Halbleitermaterial bestehende Führungsplatten sind an sich bekannt, siehe z.B. The Bell System Technical Journal, Vol. 57, No. 1, Jan. 1978, S. 91–97: C.M. Schroeder: «Accurate Silicon Spacer Chips for an Optical-Fiber Cable Connector.» Ebenso ist die Anordnung einer Vielzahl von Lichtwellenleitern vor einer Schreibtrommel bekannt, siehe z.B. US-PS 1 751 584.

Die Justierplatten werden nach Einlegen der Lichtwellenleiter 2 zusammengeklebt und an der rückwärtigen Seite zusammen mit den Lichtwellenleitern 2 abgeschnitten. Auf diese Schnittfläche wird eine Lichtquellenzeile 7 gelegt, deren Lichtquellen als Glühlampen, als Halbleiterlaser oder als lichtemittierende Dioden LED realisiert sind. Die Halbleiterlaserdioden wie auch die Lumineszenzdioden (LED) können dabei als Einzelelemente oder vorzugsweise zu mehreren in einer Zeile mit Hilfe der Halbleitertechnologie auf einem Chip aus geeignetem Halbleitermaterial integriert sein. Die einzelnen Lichtquellen der Lichtquellenzeile 7 haben untereinander den gleichen Abstand wie die Lichtwellenleiter 2 und werden genau gegenüber den Enden der eingeklebten Lichtwellenleiter 2 angebracht, vgl. Fig. 3. Die gesamte Anordnung wird mit einer Befestigungsvorrichtung und einer entsprechend der Anzahl der Lichtquellenanschlüsse 8 vielpoligen Verbin- dungsvorrichtung, vorzugsweise einer Steckerlei- ste, in Kunstharz eingegossen.

Dieser Kunstharzblock wird an seinem vorderen, nämlich dem Lichtaustrittsende der Lichtwellenleiter 2, so abgeschnitten und poliert, dass ein Teil eines Zylindermantels mit dem Radius, der um einen Mindestabstand gegenüber der Oberfläche der elektrophotographischen Trommel bzw. der Papierwalze vergrössert ist, entsteht, vgl. ebenfalls Fig. 3.

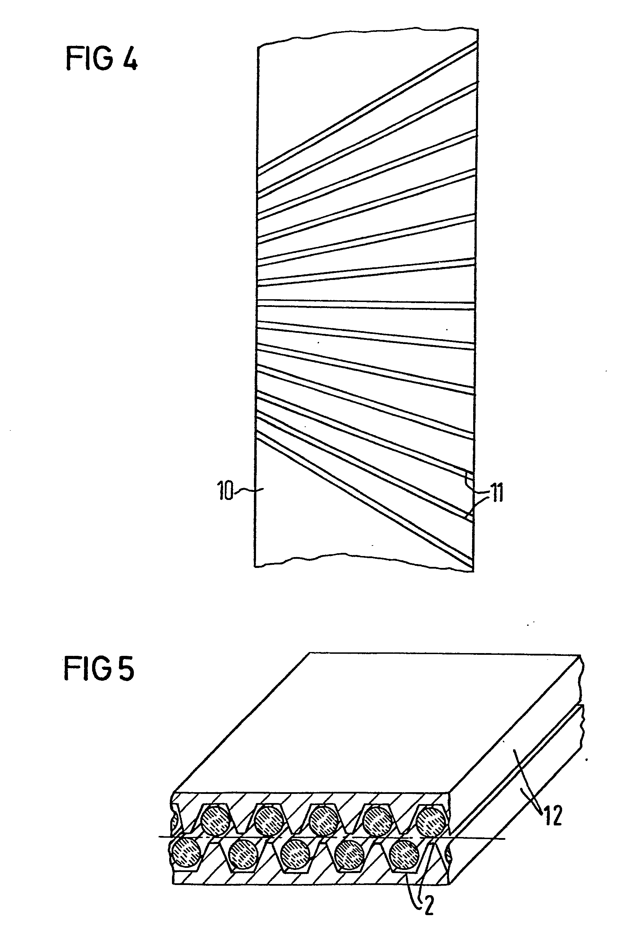

Die Gräben 11 zum Einlegen der Lichtwellenleiter 2 müssen nicht parallel zueinander verlaufen. Eine verjüngende bzw. verengende Form kann erforderlich werden, wenn die Packungsdichte der Lichtwellenleiter 2 gegenüber dem Aufzeichnungsmedium, nämlich der elektrophotographischen Trommel bzw. dem auf die Trommel gespannten photoempfindlichen Papier, grösser sein muss als die vorgegebene Packungsdichte der Lichtquellen, beispielsweise der lichtemittierenden Dioden LED der Lichtquellenzeile 7, vgl. Fig. 4.

Eine vorteilhafte Weiterbildung der Erfindung sieht vor, dass der Schreibkopf 6 aus einer Anzahl von Lichtwellenleitern 2 und zwei diese umschliessenden Zweilagen-Justierplatten 12 besteht, bei dem die verwendeten Lichtwellenleiter 2 in zwei Lagen übereinander, sich überlappend in seitlich gegeneinander versetzten Gräben 11 eingebettet, gepackt sind, und dass die beiden Zweischichten-Justierplatten 12 zusammen mit den von ihnen umschlossenen Lichtwellenleitern 2 verklebt sind.

Diese Weiterbildung der Erfindung bietet den Vorteil, dass Lichtwellenleiter mit grösserem Durchmesser verwendet werden können, wodurch sich eine Überlappung der Lichtwellenleiter, vgl. Fig. 5, ergibt. Damit wird eine Streifenbildung beim Aufzeichnen vorteilhafterweise vermieden.

## Patentansprüche

1. Optische Vorrichtung zum berührungslosen Schreiben, bei der blattförmiges Aufzeichnungsmaterial auf eine Trommel gespannt ist, vor der in einem Mindestabstand ein mittels einer Führungsvorrichtung parallel zur Trommelachse bewegbarer Schreibkopf angeordnet ist, der Lichtwellenleiter in Form von Glasfasern enthält, in dem die der Trommel zugewandten Lichtaustrittsenden der Lichtwellenleiter linear und dicht gepackt nebeneinander angeordnet sind und bei dem die Bildinformation, die jeweils durch die Lichtaustrittsenden der Lichtwellenleiter in der Form von Bildpunkten strukturiert wird, mittels entsprechend moduliertem Lichtes den der Trommel abgewandten Lichteintrittsenden der Lichtwellenleiter zuführbar und durch die Lichtwellenleiter übertragbar ist, wobei die lineare Anordnung der Lichtaustrittsenden senkrecht zu der Achse der Trommel orientiert ist und wobei individuelle, entsprechend der jeweils eintreffenden Bildinformation erregbare Lichtquellen vorgesehen sind, die jeweils individuell einem Lichtwellenleiter zugeordnet und räumlich derart angeordnet sind, dass ihre jeweilige Lichtemission auf die Lichteintrittsenden der Lichtwellenleiter gerichtet ist, dadurch gekennzeichnet, dass die einzelnen Lichtwellenleiter (2) in an sich bekannter Weise masshaltig in ihrer relativen Lage zueinander durch zumindest eine an sich bekannte mit auf photolithographischem Wege eingeätzten Gräben (11) versehene, vorzugsweise aus Halbleitermaterial bestehende Justierplatte (3, 10, 12) fixiert sind, dass der Schreibkopf (6) aus einer Anzahl von Lichtwellenleitern (2) und zwei diese einschliessenden Einschicht-Justierplatten (3) besteht, dass die beiden Einschicht-Justierplatten (3) zusammen mit den von ihnen umschlossenen Lichtwellenleitern (2) verklebt sind, dass die trommelseitige Schreibkopffläche (5), die die Lichtaustrittsenden der Lichtwellenleiter (2) aufweist, entsprechend dem gegebenen Trommelradius (4) so geformt und bearbeitet ist, dass sie eine konkave, reibungsarme Fläche als Nachbildung des Zylindermantels der Trommel (1) mit um einen Mindestabstand beider Oberflächen voneinander vergrössertem Radius darstellt, dass die der Trommel (1) abgewandte, die Lichteintrittsenden der Lichtwellenleiter (2) aufweisende Seite des Schreibkopfes (6) mit einer Lichtquellenzeile (7) derart verbunden ist, dass jeweils die Lichtemission einer individuellen Lichtquelle auf das Lichteintrittsende des ihr zugeordneten Lichtwellenleiters (2) gerichtet ist, dass die Lichtquellenzeile (7) mit einer die notwendigen elektrischen Lichtquellenanschlüsse (8) enthaltenden Verbindungsvorrichtung, vorzugsweise einer Steckerleiste, verbunden ist, dass der Gesamtaufbau des Schreibkopfes (6) zusammen mit einer Befestigungsvorrichtung zu einer monolithischen Anordnung, die vorzugsweise kunstharzvergossen ist, zusammengefasst ist und dass die Ansteuerung der Lichtquellen mit einer Mikrocomputeranordnung oder einem Mikroprozessor durchgeführt wird.

2. Optische Vorrichtung nach Anspruch 1, dadurch gekennzeichnet, dass die Lichtquellen als Glühlampen realisiert sind.

3. Optische Vorrichtung nach Anspruch 1, dadurch gekennzeichnet, dass die Lichtquellen als lichtemittierende Dioden LED (9) realisiert sind.

4. Optische Vorrichtung nach Anspruch 1, dadurch gekennzeichnet, dass die Lichtquellen als Halbleiterlaserdioden realisiert sind.

5. Optische Vorrichtung nach Anspruch 3, dadurch gekennzeichnet, dass die lichtemittierenden Dioden LED zu mehreren in einer Zeile mit Hilfe der Halbleitertechnologie auf einem Chip aus geeignetem Halbleitermaterial integriert sind.

6. Optische Vorrichtung nach Anspruch 4, dadurch gekennzeichnet, dass die Halbleiterlaserdioden zu mehreren in einer Zeile mit Hilfe der Halbleitertechnologie auf einem Chip aus geeignetem Halbleitermaterial integriert sind.

7. Optische Vorrichtung nach Anspruch 1, dadurch gekennzeichnet, dass das Halbleitermaterial Si ist.

8. Optische Vorrichtung nach Anspruch 1, dadurch gekennzeichnet, dass das Halbleitermaterial GaAs ist.

9. Optische Vorrichtung nach Anspruch 1, dadurch gekennzeichnet, dass das Halbleitermaterial GaP ist.

## Claims

1. An optical device for contactless recording, wherein recording material in sheet form is stretched over a drum which is preceded at a minimum distance by a recording head which can be moved parallel to the axis of the drum by means of a guiding device and which contains optical waveguides in the form of glass fibres, and in which the light outlet ends of the optical waveguides which face towards the drum are arranged linearly and densely packed one beside another, and wherein the image information, the structure of which is formed by the light outlet ends of the optical waveguides in the form of image points, can be fed by means of appropriately modulated light to the light inlet ends of the optical waveguides which face away from the drum, and can be transmitted by the optical waveguides, where the linear arrangement of the light outlet ends is orientated at right angles to the axis of the drum and where individual light sources are provided which can be energised in accordance with the particular incoming image information and each of which is individually assigned to an optical waveguide and spatially arranged in such a way that its light emission is directed towards the light inlet end of the assigned optical waveguide, characterised in that the individual optical waveguides (2) are fixed in known manner in their positions relative to one another so as to retain their measurements by means of at least one adjusting plate (3, 10, 12) which is known per se, is provided with photolithographically etched trenches (11) and preferably is made of semiconductor material; that the recording head (6) consists of a number of optical waveguides (2) and two single-layer adjusting plates (3) which enclose the latter; that the two single-layer adjusting plates (3) are stuck together with the optical waveguides (2) which they enclose; that the drum-side surface of the recording head (5) which displays the light outlet ends of the optical waveguides (2), is shaped and processed in accordance with the given drum radius (4) in such a way that it represents a concave, low-friction surface as a reproduction of the cylindrical surface of the drum (1) with a radius which is increased by a minimum distance of the two surfaces from one another; that that side of the recording head (6) which faces away from the drum (1) and displays the light inlet ends of the optical waveguides (2) is connected to a row of light sources (7) in such a way that the light emission of each individual light source is directed towards the light inlet end of its assigned optical waveguide (2); that the row of light sources (7) is connected to a connecting device, preferably a plug strip, which contains the necessary electrical light source connections (8); that the overall structure of the recording head (6) is combined with a fixing device to form a monolithic arrangement which is preferably cast in synthetic resin; and that the triggering of the light sources is effected by a microcomputer arrangement, or a microprocessor.

2. An optical device according to Claim 1, characterised in that the light sources are formed by incandescent lamps.

3. An optical device according to Claim 1, characterised in that the light sources are formed by light-emitting diodes LED (9).

4. An optical device according to Claim 1, characterised in that the light sources are formed by semiconductor laser diodes.

5. An optical device according to Claim 3, characterised in that the light-emitting diodes LED are integrated in a group in a row on a chip made of suitable semiconductor material with the help of semiconductor technology.

6. An optical device according to Claim 4, characterised in that the semiconductor laser diodes are integrated in a group in a row on a chip made of a suitable semiconductor material with the help of semiconductor technology.

7. An optical device according to Claim 1, characterised in that the semiconductor material is Si.

8. An optical device according to Claim 1, characterised in that the semiconductor material is GaAs.

9. An optical device according to Claim 1, characterised in that the semiconductor material is GaP.

**Revendications**

1. Dispositif optique d'enregistrement sans contact, dans lequel le support d'enregistrement en forme de feuille est tendu sur un tambour devant lequel est disposée, à une distance minimale, une tête d'enregistrement déplaçable parallèlement à l'axe du tambour au moyen d'un dispositif de guidage et qui contient des guides de lumière réalisés sous la forme de fibres de verre et dans lequel les extrémités de sortie de la lumière, tournées vers le tambour, des guides de lumière sont montées côte à côte selon une disposition linéaire et serrée, et dans lequel l'information d'image, qui est structurée respectivement par les extrémités de sortie de la lumière des guides de lumière sous la forme des points d'image, peut être envoyée, au moyen d'une lumière modulée de façon correspondante aux extrémités d'entrée de la lumière, tournées à l'opposé du tambour, des guides de lumière et peut être transmise par les guides de lumière, la disposition linéaire des extrémités de sortie de la lumière étant orientée perpendiculairement à l'axe du tambour, tandis qu'il est prévu des sources de lumière individuelles, pouvant être excitées respectivement en fonction de l'information d'image d'entrée, et qui sont associées individuellement à un guide de lumière et sont disposées dans l'espace de telle sorte que leur émission respective de lumière est dirigée vers les extrémités d'entrée de la lumière des guides de lumière, caractérisé par le fait que les différents guides de lumière (20) sont fixés les uns par rapport aux autres dans leur position relative d'une manière connue en soi, conformément à des dimensions exactes, par au moins une plaque d'ajustement (3, 10, 12) qui est munie de sillons (11) réalisés de façon connue en soi par attaque chimique par voie photolithographique, et constituée de préférence en un matériau semiconducteur, que la tête d'enregistrement (6) est constituée par un certain nombre de guides de lumière (2) et par deux plaques d'ajustement à une couche (3) enserrant ces guides de lumière, que les deux plaques d'ajustement à une couche (3) sont collées aux guides de lumière (2) qu'elles entourent, que la surface (5) de la tête d'enregistrement, qui est tournée vers le tambour et porte les extrémités de sortie de la lumière des guides de lumière (2), est conformée et usinée en fonction du rayon donné (4) du tambour de telle sorte qu'elle représente une surface concave fournissant un faible frottement et simulant l'enveloppe cylindrique du tambour (2), et possédant un rayon augmenté de l'écart minimal réciproque entre les deux surfaces, que la face de la tête d'enregistrement (6), tournée à l'opposé du tambour (1), est dirigée vers les extrémités d'entrée de la lumière des guides de lumière (2), et est reliée à une rangée (7) de sources de lumière de telle sorte que l'émission de la lumière d'une source de lumière individuelle est dirigée sur l'extrémité d'entrée de la lumière du guide de lumière (2) qui lui est associée, que la rangée (7) de sources de lumière est reliée à un dispositif de liaison, de préférence une barrette de connexions, contenant les raccords électriques nécessaires (8) des sources de lumière, que la structure d'ensemble de la tête d'enregistrement (6) est réunie à un dispositif de fixation pour former un dispositif monolithique qui est de préférence en résine synthétique moulée, et que la commande des sources de lumière est réalisée à l'aide d'un dispositif à micro-ordinateur ou d'un microprocesseur.

2. Dispositif optique suivant la revendication 1, caractérisé par le fait que les sources de lumière sont réalisées sous la forme de lampes à incandescence.

3. Dispositif optique suivant la revendication 1, caractérisé par le fait que les sources de lumière sont réalisées sous la forme de diodes à luminescence LED (9).

4. Dispositif optique suivant la revendication 1, caractérisé par le fait que les sources de lumière sont réalisées sous la forme de diodes laser à semiconducteurs.

5. Dispositif optique suivant la revendication 3, caractérisé par le fait que les diodes à luminescence LED sont intégrées, à plusieurs, suivant une rangée, à l'aide de la technologie des semiconducteurs sur une microplaquette constituée en un matériau semiconducteur approprié.

6. Dispositif optique suivant la revendication 4, caractérisé par le fait que les diodes laser à semiconducteurs sont intégrées, à plusieurs sur une rangée, à l'aide de la technologie des semiconducteurs sur une microplaquette constituée en un matériau semiconducteur approprié.

7. Dispositif suivant la revendication 1, caractérisé par le fait que le matériau semiconducteur est du Si.

8. Dispositif optique suivant la revendication 1, caractérisé par le fait que le matériau semiconducteur est du GaAs.

9. Dispositif optique suivant la revendication 1, caractérisé par le fait que le matériau semiconducteur est du GaP.

FIG 1

FIG 2

FIG 3

**FIG 4**

**FIG 5**